Europäisches Patentamt

European Patent Office

Office européen des brevets

(19)

(11) Veröffentlichungsnummer : **0 018 642**
**B1**

(12)                    **EUROPÄISCHE PATENTSCHRIFT**

(45) Veröffentlichungstag der Patentschrift :
14.09.83

(21) Anmeldenummer : 80102362.3

(22) Anmeldetag : 01.05.80

(51) Int. Cl.³ : **G 01 J   5/00**

(54) Anordnung zur berührungslosen Messung der Temperatur von teiltransparenten Medien über verschiedene Schichttiefen.

(30) Priorität : 02.05.79 DE 2917653

(43) Veröffentlichungstag der Anmeldung :
12.11.80 Patentblatt 80/23

(45) Bekanntmachung des Hinweises auf die Patenterteilung : 14.09.83 Patentblatt 83/37

(84) Benannte Vertragsstaaten :
GB SE

(56) Entgegenhaltungen :
US A 2 909 924
US A 2 912 862

IEEE TRANSACTIONS on INDUSTRY APPLICA-TIONS, Band IA-12, N° 2 März-April 1976 New York ZS D. ROBERTSON : « Glass temperature measurement with Radiation pyrometers », Seiten 161-165

IEEE TRANSACTIONS on INDUSTRY APPLICA-TIONS, Band IA-11, N° 4 Juli-August 1975 New York US R. VISKANTA et al. : « Spectral remote sensing of temperature distribution in Glass », Seiten 438-445

TEMPERATURE : ITS MEASUREMENT and CONTROL IN SCIENCE and INDUSTRY edited by C. HERZFELD, Band 3, Teil 2, 1962 Ausgeber : Reinhold P.C. New York US D. McGRAW et al. : « Applications of radiation pyrometry to Glass forming processes », Seiten 381-389

(73) Patentinhaber : **Schott Glaswerke**
**Hattenbergstrasse 10**
**D-6500 Mainz (DE)**

(72) Erfinder : **Neuroth, Norbert**
**Am Stollhenn 9**
**D-6500 Mainz-Monbach (DE)**
Erfinder : **Haspel, Rainer**
**Grabenstrasse 33**
**D-6521 Monsheim (DE)**

(74) Vertreter : **Rasper, Joachim, Dr.**
**Bierstadter Höhe 22**
**D-6200 Wiesbaden (DE)**

# Anordnung zur berührungslosen Messung der Temperatur von teiltransparenten Medien über verschiedene Schichttiefen

Die Erfindung betrifft eine neuartige Meßanordnung zur schnellen, berührungslosen Messung der Temperatur von teiltransparenten Medien, wie z. B. Glas, Kunststoff oder Kristalle mittels eines Pyrometers.

Die von einem heißen Körper ausgesandte Strahlung ist eine Funktion seiner Temperatur und seines Emissionsvermögens. Man nutzt diese Tatsache technisch aus zur berührungslosen Temperaturmessung, indem man die Intensität der vom Objekt ausgesandten Strahlung mißt (Pyrometrie). Die Eichung erfolgt durch Vergleich mit der Strahlungsintensität, die ein schwarzer Körper aussendet. Das ist die Öffnung eines Ofens, dessen Inneres überall auf gleicher Temperatur ist. Die spektrale Intensitätsverteilung der von einer solchen Öffnung ausgesandten Strahlung ist durch das Plank'sche Strahlungsgesetz beschrieben. Ein Körper auf gleicher Temperatur wie ein schwarzer Körper emittiert im allgemeinen eine geringere Intensität als der schwarze Körper. Eine Ursache ist die Reflexion des Körpers. Eine zweite Ursache kann die unvollkommene Absorption sein. Gemäß dem Kirchhoff'schen Gesetz emittiert ein heißer Körper entsprechend seinem Absorptionsvermögen.

Dies hat für transparente Medien wie Glas, Kunststoff und Kristalle zur Folge, daß man die pyrometrische Temperatur korrigieren muß. Diese Korrektur ist bei geringer Schichtdicke des Mediums sehr groß, wenn das Pyrometer in einem Spektralbereich arbeitet, in dem das Medium transparent ist. Andererseits ist es bei teiltransparenten Medien möglich, die Temperatur über verschiedene Schichttiefen zu messen dadurch, daß man den Arbeitsspektralbereich für das Pyrometer passend wählt. Ziel der vorliegenden Erfindung ist eine pyrometrische Meßanordnung, mit der die Messung der Temperatur von teiltransparenten Medien über verschiedene Schichttiefen möglich ist. Dieses Ziel wird mit einer Meßanordnung gemäß dem ersten Anspruch erreicht.

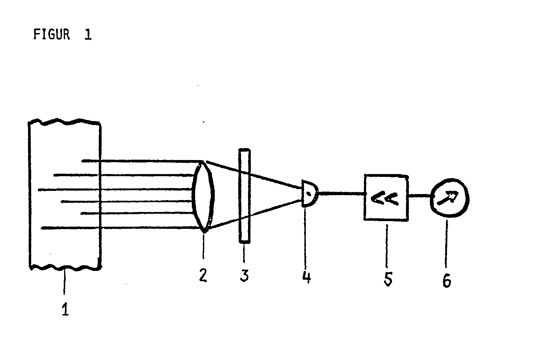

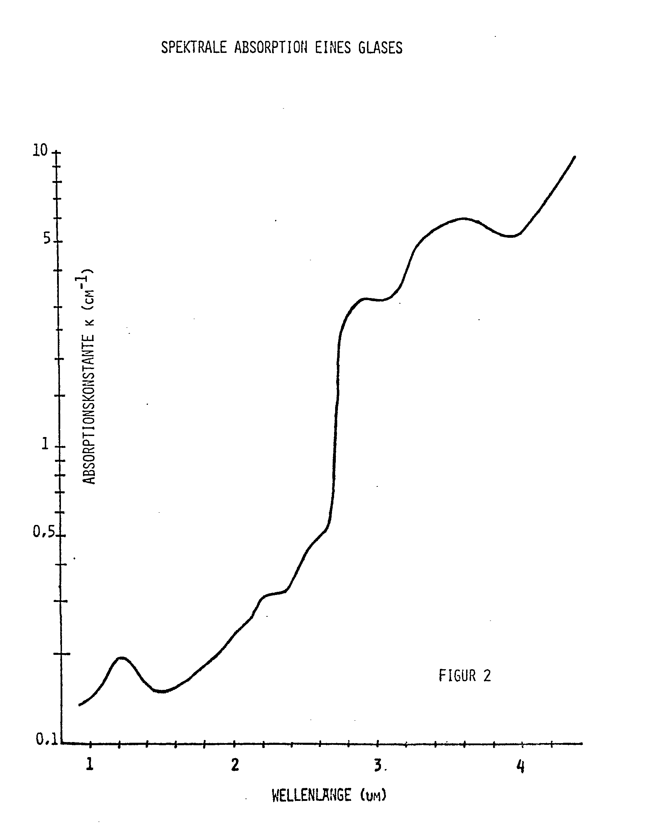

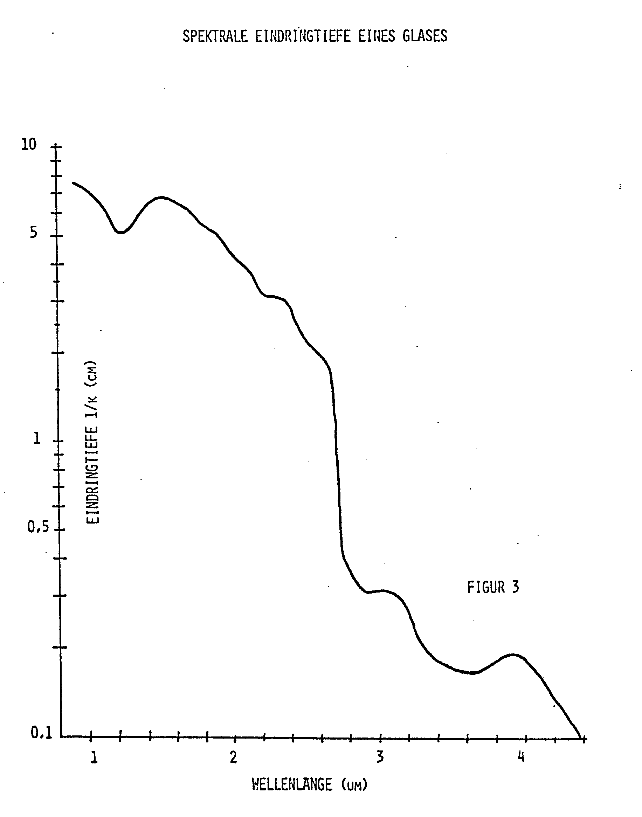

In der Zeichnung sind die Meßanordnung (Figur 1), die spektrale Eindringtiefe eines Glases (Figur 3), sowie die spektrale Absorption eines Glases (Figur 2) wiedergegeben.

In Figur 1 ist (1) das teiltransparente Medium, das die Wärmestrahlung aussendet. Mit einer Linse (2) wird die Strahlung auf einen Empfänger (4) konzentriert, der in einem größeren Spektralbereich empfindlich ist. Das Signal des Empfängers wird mit dem Verstärker (5) verstärkt und mit dem Instrument (6) angezeigt. Zwischen der Linse und dem Empfänger ist ein Filter 3 eingesetzt, dessen Durchlässigkeitsbereich jeweils aufgrund der spektralen Transmission des zu messenden Mediums und der jeweils gewünschten Schichttiefe gewählt wird. Diese Auswahl wird im folgenden erläutert:

Die Strahlungsintensität nimmt in einem absorbierenden Medium bekanntlich exponentiell mit der Schichtdicke ab gemäß

$$I_d = I_o e^{-kd}.$$

Dabei ist $I_o$ die Intensität der in das Medium eindringenden Strahlung und $I_d$ die Intensität nach Durchlaufen der Schichtdicke d. K ist die Absorptionskonstante. Ihr Kehrwert 1/k wird Eindringtiefe genannt. Nach Durchlaufen der Schichtdicke 1/k ist die Intensität auf 0,37 der Anfangsintensität gesunken. Nach Durchlaufen einer Schicht, die gleich der zweifachen Eindringtiefe ist, beträgt die Intensität 0,14 der Anfangsintensität; nach Durchlaufen der dreifachen Eindringtiefe beträgt die Intensität 0,05 der Anfangsintensität. Wenn der Körper heiß ist, stammen 95 % der emittierten Strahlung aus einer Schicht mit der dreifachen Eindringtiefe.

Bei dielektrischen Stoffen setzt die Absorption im mittelwelligen oder langwelligen infraroten Spektralbereich ein. Figur 2 zeigt als Beispiel für Absorption k($\lambda$) eines Glases im infraroten Spektralbereich. Dies dient als Grundlage für das erfindungsgemäße Verfahren. Man trägt die Größe 1/k($\lambda$) gegen die Wellenlänge auf (Figur 3). Man will zum Beispiel die Temperatur einer Platte während des Ziehens aus der Wanne oder eines heißen Glastropfens bis in die Tiefe d messen. Dann sucht man in der Kurve in Figur 3 die Wellenlänge $\lambda_s$, bei der 1/K = d/3 ist. Diese Wellenlänge (oder ein Wellenlängenbereich), für die diese Beziehung gilt, ist dann der für diese Messung geeignete Arbeitsbereich des Strahlungspyrometers. Der Tropfen sei z. B. 12 cm dick. Einmal soll die Temperatur in einer 1 cm tiefen Randzone des Tropfens gemessen werden, zum anderen soll ein Mittelwert über den Temperaturverlauf vom Tropfenrand bis zur Mitte ermittelt werden. Im ersten Fall wird ein Filter mit Durchlässigkeit bei 3,1 µm in das Pyrometer eingesetzt; denn bei dieser Wellenlänge beträgt die Eindringtiefe 1/K = 0,33 cm bzw. die 3-fache Eindringtiefe 1 cm. Im zweiten Fall verwendet man ein Filter mit der Durchlässigkeit bei der Wellenlänge 2,6 µm; denn bei dieser Wellenlänge beträgt die Eindringtiefe 1/K = 2 cm bzw. die 3-fache Eindringtiefe 6 cm, das ist der Radius des Tropfens.

Um die Temperatur über verschiedene Tiefen des Objektes möglichst schnell zu erfassen, kann man die Filter für die Messung über verschiedene Tiefen mit einer automatischen Vorrichtung wechseln. Oder man verwendet zwei oder mehrere Meßinstrumente mit verschiedenen Filtern.

Schließlich kann man die nach der beschriebenen Methode ermittelten Filter auch in einer Wärmebildkamera verwenden, so daß damit die flächenhafte Temperaturverteilung eines teiltransparenten Objektes über die jeweils gewählten Schichtdicke $d_i$ bestimmt werden kann.

## Ansprüche

1. Meßanordnung zum berührungslosen Messen der Temperatur von teiltransparenten Medien, wie z. B. Glas, Kunststoff oder Kristallen mittels eines Pyrometers, bei welchem die von dem zu messenden Objekt ausgehende Strahlung mit einem photoelektrischen Empfänger bestimmt wird, vor dem ein Filter angeordnet ist, dadurch gekennzeichnet, daß zur Messung über eine beliebig vorzugebende Schichttiefe d das Filter nur einen ausgewählten Teil um die Wellenlänge $\lambda_s$ des infraroten Spektralbereiches durchläßt, für den die mittlere Absorptionskonstante des zu messenden mediums

$$k(\lambda_s) = 3/d$$

beträgt.

2. Anordnung nach Anspruch 1, dadurch gekennzeichnet, daß zum Messen der Temperaturverteilung ein Pyrometer mit auswechselbaren Filtern verwendet wird, welche jeweils nur einen ausgewählten Spektralbereich $\lambda_{si}$ durchlassen, für den gilt

$$K(\lambda_{si}) = 3/d_i,$$

wobei $d_i$ die verschiedenen Schichttiefen sind, über die die Temperatur jeweils ermittelt werden soll.

3. Anordnung nach Anspruch 2, dadurch gekennzeichnet, daß mehrere Pyrometer verwendet werden mit Filtern, die an verschiedenen Stellen des infraroten Spektralbereiches so durchlässig sind, daß die Absorptionskonstante des zu messenden Objektes die Bedingung erfüllt

$$K(\lambda_{si}) = 3/d_i.$$

4. Anordnung nach Anspruch 2 oder 3, dadurch gekennzeichnet, daß zur Messung der flächenhaften Temperaturverteilung diese Filter in einer Wärmebildkamera verwendet werden.

## Claims

1. Measuring arrangement for contactless measurement of the temperature of partially transparent media, such as glass, plastics or crystals, by means of a pyrometer, by which arrangement the radiation emitted from the object to be measured is determined with a photoelectric receiver having a filter arranged ahead thereof, characterized in that for measuring an arbitrarily predetermined layer depth d the filter only transmits a selected portion of the infrared spectral range around wavelength $\lambda_s$, for which the mean absorption constant of the medium to be measured is

$$k(\lambda_s) = 3/d.$$

2. Arrangement as defined in claim 1, characterized in that a pyrometer having exchangeable filters is used for measuring the temperature distribution, in each instance said filters transmitting only a selected spectral range $\lambda_{si}$ which pertains to

$$K(\lambda_{si}) = 3/d_i,$$

where $d_i$ stands for the various depths of layer over which the temperature is to be determined in each instance.

3. Arrangement as defined in claim 2, characterized in that several pyrometers are used, fitted with filters having such transmission characteristics at various points of the infrared spectral range that the absorption constant of the object to be measured satisfies the following condition

$$K(\lambda_{si}) = 3/d_i.$$

4. Arrangement as defined in claims 2 or 3, characterized in that for measuring the superficial temperature distribution said filters are used in conjunction with a heat image camera.

## Revendications

1. Disposition permettant de mesurer la température de fluides partiellement transparents, tels que le verre, la matière plastique ou les cristaux, sans les toucher, à l'aide d'un pyromètre avec lequel le rayonnement qui émane de l'objet de la mesure est défini par un récepteur photo-électrique en amont duquel se trouve un filtre, caractérisée par le fait que, pour la mesure d'une profondeur de couche quelconque prédéfinie, le filtre ne laisse passer qu'une partie sélectionnée aux environs de la longueur d'ondes $\lambda_s$ du domaine spectral infrarouge pour lequel la constante d'absorption moyenne du fluide objet de la mesure est de :

$$k(\lambda_s) = 3/d.$$

2. Disposition selon la revendication 1, caractérisée par le fait que l'on utilise pour la mesure de la répartition de la température un pyromètre à filtres interchangeables ne laissant passer que des domaines spectraux sélectionnés pour lesquels

$$K(\lambda_{si}) = 3/d_i,$$

$d_i$ représentant les diverses profondeurs de couche pour lesquelles la température est à définir.

3. Disposition selon la revendication 2, caractérisée par le fait que l'on utilise plusieurs pyromètres avec des filtres dont la perméabilité en certains points du domaine spectral infrarouge est telle que la constante d'absorption de l'objet de la mesure remplisse la condition

$$K(\lambda_{si}) = 3/d_i \, .$$

4. Disposition selon la revendication 2 ou 3, caractérisée par le fait que l'on utilise ce filtre, pour mesurer la répartition en surface de la chaleur, dans une caméra permettant de prendre des images par rayonnement thermique.

FIGUR 1

SPEKTRALE ABSORPTION EINES GLASES

FIGUR 2

**0 018 642**

SPEKTRALE EINDRINGTIEFE EINES GLASES

FIGUR 3